# EUROPÄISCHE PATENTSCHRIFT

(11) **EP 2 791 751 B1**
(45) Veröffentlichungstag und Bekanntmachung des Hinweises auf die Patenterteilung: **31.05.2017**
(21) Anmeldenummer: 12812160.5
(22) Anmeldetag: 06.12.2012
(51) Int. Cl.: G05D 7/06, H02P 6/06, H02P 23/00

(54) **STEUERVORRICHTUNG FÜR EINEN KÜHLERLÜFTER, KÜHLERLÜFTERANORDNUNG UND VERFAHREN**
CONTROL DEVICE FOR A RADIATOR FAN, RADIATOR FAN ARRANGEMENT AND METHOD
DISPOSITIF DE COMMANDE POUR UN VENTILATEUR DE RADIATEUR, DISPOSITIF VENTILATEUR DE RADIATEUR ET PROCÉDÉ

(30) Priorität: 14.12.2011 DE 102011088597; 08.03.2012 DE 102012203663
(43) Veröffentlichungstag der Anmeldung: 22.10.2014
(73) Patentinhaber: Brose Fahrzeugteile GmbH & Co. Kommanditgesellschaft, Würzburg, 97076 Würzburg (DE)
(72) Erfinder: UDE, Karsten, 27798 Hude (DE); ZICK, Stefan, 97332 Volkach (DE)
(74) Vertreter: Isarpatent
(86) Internationale Anmeldenummer: PCT/EP2012/005024
(87) Internationale Veröffentlichungsnummer: WO 2013/087164

(56) Entgegenhaltungen:
- WO-A1-02/19510
- WO-A1-03/015255
- WO-A1-2006/092265
- DE-A1- 10 024 485
- DE-A1- 19 826 458
- DE-A1-102008 058 955

## Beschreibung

### GEBIET DER ERFINDUNG

Die vorliegende Erfindung betrifft sich auf eine Steuervorrichtung für einen Kühlerlüfter, insbesondere für einen Kühlerlüfter eines Kraftfahrzeugs. Die vorliegende Erfindung betrifft ferner eine Kühlerlüfteranordnung und ein Verfahren zum Steuern eines Kühlerlüfters.

### TECHNISCHER HINTERGRUND

Lüfter werden in vielen Bereichen der Technik benötigt, um Anlagen und Systeme zu kühlen und deren Betriebstemperatur innerhalb des spezifizierten Betriebstemperaturbereichs zu halten. In Fahrzeugen werden Lüfter z.B. in Kombination mit einem Kühler eingesetzt, um den Verbrennungsmotor des Fahrzeugs in dem für den Verbrennungsmotor spezifizierten Betriebstemperaturbereich zu halten und um zu verhindern, dass dieser überhitzt.

Wird ein solcher Lüfter in einem Kraftfahrzeug als Kühlerlüfter eingesetzt, gibt eine Fahrzeugsteuerung üblicherweise der Lüftersteuerung eine Solldrehzahl für den Kühlerlüfter vor. Die Lüftersteuerung regelt den Kühlerlüfter dann derart, dass dieser mit der vorgegebenen Solldrehzahl dreht. Dadurch wird bei konstanten Umgebungsbedingungen ein konstanter Luftstrom erzeugt oder es wird durch den Kühlerlüfter ein konstantes Luftvolumen gefördert.

Bei einem solchen herkömmlichen Lüfter variiert der Luftstrom, wenn sich die Umgebungsbedingungen verändern. Unter sich verändernden Umgebungsbedingungen werden solche Umgebungsbedingungen, wie z.B. Temperatur, Höhe über NN (Normalnull) und dergleichen, verstanden, welche einen Einfluss auf die Dichte der Umgebungsluft haben.

Befindet sich ein Kraftfahrzeug z.B. in großer Höhe, ist dort die Luft wesentlich dünner (also weniger dicht) als auf Meeresniveau bzw. auf NN. Dadurch bedingt sinkt aber bei gleichbleibender Drehzahl das Luftvolumen, welches der Kühlerlüfter maximal bereitstellen kann. Dies kann dazu führen, dass selbst bei maximaler Drehzahl des Kühlerlüfters dieser nicht genügend Luft zur Kühlung des Verbrennungsmotors bereitstellen kann. Dadurch steigt die Temperatur und ein Notlauf des Kühlerlüfters muss aktiviert werden, in welchem der Lüfter die Drehzahl auf eine Notlaufdrehzahl erhöht. Alternativ wäre auch denkbar, den Kühlerlüfter für diesen Fall überzudimensionieren. Dadurch würde aber das gesamte Kühlerlüftermodul einerseits schwerer und andererseits kostenintensiver in der Herstellung.

Die WO 02/19510 A1 offenbart eine Steuerung für eine elektronisch kommutierte Gleichstrommaschine mit einer einstellbaren Strombegrenzungsandordnung.

Die WO 03/015255 A1 zeigt ein Verfahren zur Kommutierung bei einem elektronisch kommutierten Motor.

Die DE 100 24 485 A1 zeigt ein Verfahren zum Betrieb eines Elektromotors, bei welchem bei einem Fehler des Motors mindestens ein Betriebswert gespeichert wird.

Die WO 2006 / 092 265 A1 offenbart ein Steuerverfahren für einen elektrisch kommutierten Motor.

Die DE 10 2008 058 955 A1 zeigt ebenfalls ein Steuerverfahren für einen elektrisch kommutierten Motor.
Die DE 198 26 458 A1 offenbart eine Steuerung eines Elektromotors mit einer Strombegrenzung.

### ZUSAMMENFASSUNG DER ERFINDUNG

Vor diesem Hintergrund ist es daher eine Aufgabe der vorliegenden Erfindung, einen Kühlerlüfter an geänderte Umgebungsbedingungen anzupassen.

Erfindungsgemäß wird diese Aufgabe durch eine Steuervorrichtung mit den Merkmalen des Patentanspruchs 1 und/oder durch eine Kühlerlüfteranordnung mit den Merkmalen des Patentanspruchs 6 und/oder durch ein Verfahren mit den Merkmalen des Patentanspruchs 7 gelöst.

Demgemäß ist vorgesehen:
Eine Steuervorrichtung für einen Kühlerlüfter, insbesondere für einen Kühlerlüfter eines Kraftfahrzeugs, mit einer äußeren Regelvorrichtung, welche dazu ausgebildet ist, eine Regelgröße für einen Elektromotor des Kühlerlüfters gemäß einem ersten vorgegebenen Sollwert zu erzeugen, mit einer inneren Regelvorrichtung, welche dazu ausgebildet ist, den Motorstrom des Elektromotors des Kühlerlüfters gemäß einem vorgegebenen ersten Motorstrommaximalwert zu regeln, wenn die von der äußeren Regelvorrichtung erzeugte Regelgröße einen derartigen Wert annimmt, dass der Motorstrom den vorgegebenen ersten Motorstrommaximalwert übersteigt.

Eine Kühlerlüfteranordnung, insbesondere für ein Kraftfahrzeug, mit einem Kühlerlüfter, welcher ein Lüfterrad und einen Elektromotor zum Antreiben des Lüfterrads aufweist, mit einer erfindungsgemäßen Steuervorrichtung, welche mit dem Kühlerlüfter gekoppelt ist und welche dazu ausgebildet ist, den Elektromotor des Kühlerlüfters zu steuern.

Ein Verfahren zum Steuern eines Kühlerlüfters eines Kraftfahrzeugs, insbesondere unter Verwendung einer erfindungsgemäßen Steuervorrichtung, mit den Schritten: Erzeugen einer Regelgröße für einen Elektromotor des Kühlerlüfters gemäß einem ersten vorgegebenen Sollwert; Regeln des Motorstroms des Elektromotors des Kühlerlüfters gemäß einem vorgegebenen ersten Motorstrommaximalwert, wenn die Regelgröße einen derartigen Wert annimmt, dass der Motorstrom den vorgegebenen ersten Motorstrommaximalwert übersteigt.

Die Idee der vorliegenden Erfindung besteht darin, die Regelung des Elektromotors für einen Kühlerlüfter auf eine äußere Regelvorrichtungen und eine innere Regelvorrichtung aufzuteilen. Dadurch kann ein sehr flexibel regelbarer Kühlerlüfters verwendet werden. Ferner kann der erfindungsgemäße Kühlerlüfter innerhalb des gesamten möglichen Drehzahlbereichs des Kühlerlüfters geregelt werden, so dass z.B. kein Notlauf des Kühlerlüfters notwendig wird.

Vorteilhafte Ausgestaltungen und Weiterbildungen ergeben sich aus den weiteren Unteransprüchen sowie aus der Beschreibung unter Bezugnahme auf die Figuren der Zeichnung.

In einer ersten bevorzugten Ausführungsform bezeichnet der vorgegebene Sollwert eine Solldrehzahl. Die äußere Regelvorrichtung ist hier als ein Drehzahlregler ausgebildet, der eine Drehzahlerfassungseinrichtung aufweist, welche dazu ausgebildet ist, eine Drehzahl des Elektromotors (10) zu erfassen. Eine solche Drehzahlregelung ermöglicht eine effiziente Ansteuerung des Elektromotors, insbesondere im Teillastbereich des Elektromotors. Ferner können bestimmte Drehzahlen des Kühlerlüfters, welche in einem Fahrzeug Resonanzen hervorrufen können und dadurch störende Geräusche erzeugen, durch diese Art der Regelung unterbunden werden. Erreicht die Drehzahl aber einen derart hohen Wert, dass der Strom, welchen der Elektromotor des Kühlerlüfters benötigen würde, um diesen Wert zu erreichen, den ersten Maximalwert übersteigt, wird der Elektromotor des Kühlerlüfters mit Hilfe der inneren Regelvorrichtung strombasiert geregelt. Durch diese Aufteilung kann sichergestellt werden, dass der Kühlerlüfter unter allen, für den Kühlerlüfter spezifizierten Umgebungsbedingungen die von dem Kühlerlüfter erwartete Leistung aufbringt.

In einer weiteren, ebenfalls bevorzugten Ausführungsform bezeichnet der vorgegebene Sollwert ein Soll-Luftvolumen. Die äußere Regelvorrichtung ist als ein Luftvolumenregler ausgebildet, der eine Luftvolumenerfassungseinrichtung aufweist, welche dazu ausgebildet ist, ein Luftvolumen des Kühlerlüfters zu erfassen. Da das Luftvolumen, welches ein Kühlerlüfter bei einer vorgegebenen Drehzahl bewegt, von der Dichte der Luft abhängt, verändert sich bei gleichbleibender Drehzahl des Kühlerlüfters das bewegte Luftvolumen, wenn sich z.B. die Temperatur ändert oder wenn der Kühlerlüfter in sehr großen Höhen, z.B. im Bereich von mehr 2000m, betrieben wird. Eine Regelung des Lüfters basierend auf dem angeforderten Luftvolumen ermöglicht es daher, unter unterschiedlichen Umgebungsbedingungen ein gleichbleibendes Luftvolumen und damit eine gleichbleibende Kühlleistung bereitzustellen.

In einer Ausführungsform ist die innere Regelvorrichtung als ein Stromregler ausgebildet, der einen Stromsensor aufweist. Der Stromsensor ist dazu ausgebildet, den Motorstrom auf einen konstanten Wert derart zu regeln, dass ein von dem Elektromotor aufgenommener Strom geringer ist, als ein für eine Leistungselektronik der Steuerung maximal zulässiger Strom. Dies ermöglicht es eine sehr einfache innere Reglung durchzuführen.

In einer weiteren Ausführungsform ist die innere Regelvorrichtung als ein Stromregler ausgebildet. Die innere Regelvorrichtung regelt den Strom derart, dass der durch den Elektromotor aufgenommene Strom kurzzeitig über dem für die Leistungselektronik der Steuerung maximal zulässigen Dauerstrom liegt, um ein erhöhtes Luftvolumen bereitzustellen. Dabei ist die innere Regelvorrichtung dazu ausgebildet, die Zeitdauer der erhöhten Stromaufnahme derart zu begrenzen, dass die Leistungselektronik keinen Schaden nimmt. Dies ermöglicht es, kurzzeitig ein erhöhtes Luftvolumen bereitzustellen.

In einer Ausführungsform weist die Steuervorrichtung einen zweiten Maximalwert auf, welcher den maximal einstellbaren Wert der Regelgröße vorgibt, wobei der Kühlerlüfter derart ausgebildet ist, dass der Motorstrom des Elektromotors bei Raumtemperatur auf den ersten Maximalwert ansteigt, bevor der Elektromotor diejenige Drehzahl erreicht, welche notwendig ist, um den zweiten Maximalwert mit dem Kühlerlüfter einzustellen, wobei der ersten vorgegebenen Sollwert (5) in Abhängigkeit von der Temperatur und/oder der Höhe über Normalnull und/oder der Dichte der Umgebungsluft erzeugt wird. Bei Raumtemperatur weist die Luft eine Dichte auf, welche höher ist, als die Dichte von Luft bei höheren Temperaturen. Daher erfordert es eine höhere Leistung, bei Raumtemperatur den Kühlerlüfter mit einer vorgegebenen Drehzahl zu betreiben, als bei höheren Temperaturen oder z.B. größeren Höhen. Werden der erste Maximalwert und der zweite Maximalwert derart vorgegeben, dass der Kühlerlüfter z.B. bei Raumtemperatur nicht mit der maximalen Drehzahl betrieben werden kann und die maximale Drehzahl nur bei höheren Temperaturen oder größeren Höhenlagen erreicht werden kann, wird eine kontinuierliche Drehzahlregelung des Kühlerlüfters bis zu seiner maximalen Drehzahl möglich, ohne dass ein Notlauf des Kühlerlüfters notwendig wäre.

In einer Ausführungsform weist Steuervorrichtung eine PWM-Schnittstelle oder eine digitale Datenschnittstelle, insbesondere eine CAN-Busschnittstelle oder eine FlexRay-Schnittstelle oder eine LIN-Busschnittstelle, auf, welche dazu ausgebildet ist, die Steuerung mit weiteren Fahrzeugsteuerungen zu koppeln und den Sollwert von mindestens einer weiteren Fahrzeugsteuerung zu empfangen. Dies ermöglicht es, einen Kühlerlüfter in unterschiedlichen Fahrzeugarchitekturen einzusetzen und den Kühlerlüfter flexibel an unterschiedliche Anwendungen anzupassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockdiagramm einer beispielhaften Ausführungsform einer erfindungsgemäßen Steuervorrichtung;
- Fig. 2: ein Blockdiagramm einer beispielhaften Ausführungsform einer erfindungsgemäßen Kühlerlüfteranordnung;
- Fig. 3: ein Ablaufdiagramm einer beispielhaften Ausführungsform eines erfindungsgemäßen Verfahrens;
- Fig. 4: ein Blockdiagramm einer weiteren beispielhaften Ausführungsform einer erfindungsgemäßen Steuervorrichtung;
- Fig. 5: ein Diagramm mit zwei Drehzahlkurven und zwei Leistungskurven, wie sie bei einer Ausführungsform einer erfindungsgemäßen Kühlerlüfteranordnung 2 aufgenommen werden können.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

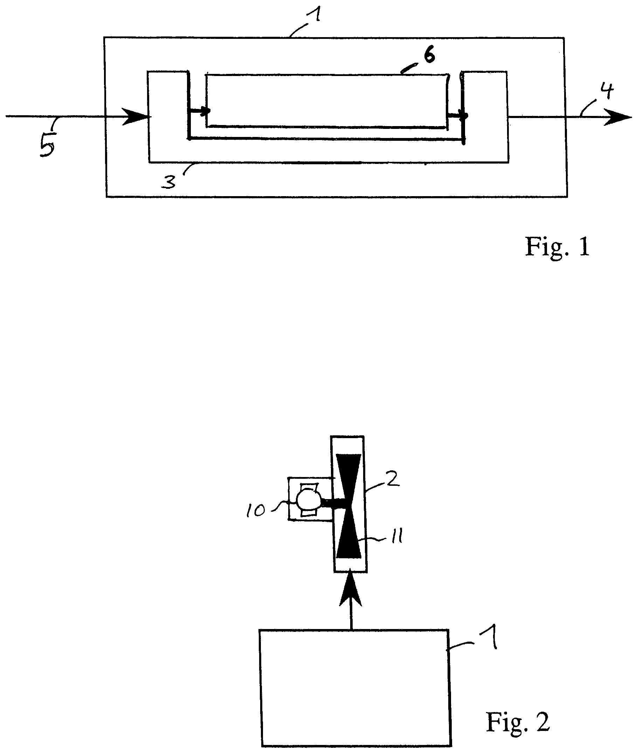

Fig. 1 zeigt ein Blockdiagramm einer beispielhaften Ausführungsform einer erfindungsgemäßen Steuervorrichtung 1.

Die erfindungsgemäße Steuereinrichtung ist hier mit Bezugszeichen 1 bezeichnet. Die Steuervorrichtung 1 weist eine äußere Regelvorrichtung 3 und eine innere Regelvorrichtung 6 auf.

Die äußere Regelvorrichtung 3 erzeugt eine Regelgröße 4, welche einem Elektromotor 10 eines Kühlerlüfters 2 (nicht in Fig. 1 dargestellt) zugeführt werden kann. Ferner nimmt die äußere Regelvorrichtung 3 einen vorgegebenen Sollwert 5 auf, welcher einen Sollwert für die Regelgröße 4 angibt.

Zwischen der äußeren Regelvorrichtung 3 und dem Ausgang der Regelgröße 4 ist in der Steuervorrichtung 1 die innere Regelvorrichtung 6 vorgesehen. Die innere Regelvorrichtung 6 ist dazu ausgebildet, den Motorstrom des Elektromotors 10 zu überwachen. Ferner ist die innere Regelvorrichtung 6 dazu ausgebildet, die Regelgröße 4, welche die äußere Regelvorrichtung 3 erzeugt, durch eine mittels einer Stromregelung erzeugte Regelgröße 4 zu ersetzen, falls der Motorstrom einen vorgegebenen ersten Maximalwert übersteigt. Dabei führt die innere Regelvorrichtung 6 eine Stromregelung derart durch, dass der Motorstrom auf einen konstanten Stromwert geregelt wird, wenn der Motorstrom den vorgegebenen ersten Maximalwert auf Grund des vorgegebenen Sollwerts 5 überschreitet.

Die Steuervorrichtung 1 weist einen PWM-Eingang für den vorgegebenen Sollwert 5 auf. Dieser kann von einer geeigneten Steuervorrichtung z.B. in einem Kraftfahrzeug sehr einfach als PWM-moduliertes Signal erzeugt werden.

Ferner sind die äußere Regelvorrichtung 3 und die innere Regelvorrichtung 6 aus diskreten Schaltungselementen aufgebaut. In weiteren Ausführungsformen können die äußere Regelvorrichtung 3 und die innere Regelvorrichtung 6 als Computerprogrammprodukte beispielsweise in einem Speicher der Steuervorrichtung 1 gespeichert sein und von einer Rechenvorrichtung oder einem eigens dafür vorgesehenen Controller der Steuervorrichtung 1 ausgeführt werden.

Fig. 2 zeigt ein Blockdiagramm einer beispielhaften Ausführungsform einer erfindungsgemäßen Kühlerlüfteranordnung 2.

Die Kühlerlüfteranordnung in Fig. 2 weist eine erfindungsgemäße Steuervorrichtung 1 auf, welche dazu ausgebildet ist einen Kühlerlüfter 2 zu steuern. Der Kühlerlüfter 2 weist einen Elektromotor 10 und eine Lüfterrad 11 auf.

In weiteren Ausführungsformen kann die Kühlerlüfteranordnung in einem Kraftfahrzeug eingebaut sein und mit einem digitalen Fahrzeugbus des Fahrzeugs verbunden sein. Die Steuervorrichtung 1 empfängt in einer solchen Ausführungsform die vorgegebene Sollgröße 5 in Form digitaler Daten über den Fahrzeugbus.

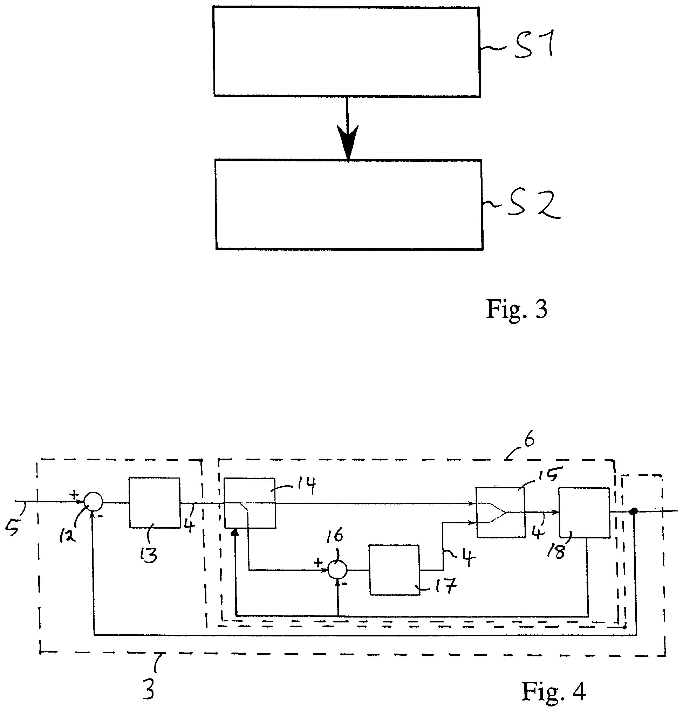

Fig. 3 zeigt ein Ablaufdiagramm einer beispielhaften Ausführungsform eines erfindungsgemäßen Verfahrens.

In einem ersten Schritt S1 wird eine Regelgröße 4 für den Elektromotor 10 des Kühlerlüfters 2 gemäß einem ersten vorgegebenen Sollwert 5 erzeugt. In einem zweiten Schritt S2 wird der Motorstrom des Elektromotors 10 des Kühlerlüfters 2 geregelt, wenn die Regelgröße 4 einen derartigen Wert annimmt, dass der Motorstrom einen vorgegebenen ersten Maximalwert für den Motorstrom übersteigt.

Fig. 4 zeigt ein Blockdiagramm einer weiteren beispielhaften Ausführungsform einer erfindungsgemäßen Steuervorrichtung 1.

Die Steuervorrichtung 1 in Fig. 4 weist ebenfalls eine äußere Regelvorrichtung 4 und eine innere Regelvorrichtung 6 auf. Im Gegensatz zu Fig. 1 weist die äußere Regelvörrichtung 4 in Fig. 4 einen ersten Summationsblock 12 auf, welcher an einem positiven Eingang eine Solldrehzahl 5 erhält und an einem negativen Eingang die aktuelle Drehzahl eines Kühlerlüfterkühlers 2 (nicht dargestellt). Die Differenz aus Solldrehzahl 5 und aktueller Drehzahl wird einem Drehzahlregler 13 zugeführt. Dieser erzeugt basierend auf der Differenz aus Solldrehzahl 5 und aktueller Drehzahl eine Regelgröße 4. Die Regelgröße 4 kann z.B. eine dem Elektromotor 10 zuzuführende elektrische Spannung 4 sein.

Der Ausgang des Drehzahlreglers 13 ist mit einem Entscheidungsblock 14 der inneren Regelvorrichtung 6 gekoppelt. Der Entscheidungsblock 14 ermittelt, ob die Stromstärke des Motorstroms des Elektromotors 10 den vorgegebenen ersten Maximalwert übersteigt.

Ist der Motorstrom kleiner als der vorgegebene erste Maximalwert, leitet der Entscheidungsblock 14 die Regelgröße 4, welcher der Drehzahlregler 13 erzeugt hat, an den Auswahlblock 15 weiter. Dieser ist mit Motorwindungen 18 des Elektromotors 10 gekoppelt und überträgt die Regelgröße 4, z.B. die elektrische Spannung 4, an die Motorwindungen 18.

Ist der aktuelle Motorstrom größer als der vorgegebene erste Maximalwert, leitet der Entscheidungsblock 14 die Regelgröße 4 nicht an den Auswahlblock 15 weiter. In diesem Fall leitet der Entscheidungsblock 14 den vorgegebenen ersten Maximalwert für den Motorstrom an einen positiven Eingang eines zweiten Summationsblocks 16. Der zweite Summationsblock 16 erhält an einem zweiten, negativen Eingang die Stärke des aktuellen Motorstroms, welcher in den Motorwindungen 18 fließt, und bildet die Differenz aus der Stärke des aktuellen Motorstroms und dem vorgegebenen ersten Maximalwert. Diese Differenz wird dem Stromregler 17 zugeführt, welcher die Regelgröße 4 derart erzeugt, dass der Motorstrom einen konstanten Wert annimmt. Der konstante Wert des Motorstroms entspricht dabei einer Stromstärke, welche der maximal zulässigen Dauerstromstärke einer Leistungselektronik der Steuervorrichtung 1 entspricht.

Die von dem Stromregler 17 erzeugte Regelgröße 4 wird an einen zweiten Eingang des Auswahlblocks 15 übermittelt. Empfängt der Auswahlblock 15 eine von dem Stromregler erzeugte Regelgröße 4 übermittelt der Auswahlblock 15 nicht die Regelgröße 4, welche der Drehzahlregler 13 erzeugt hat, an die Motorwindungen 18 sondern die von dem Stromregler erzeugte Regelgröße 4.

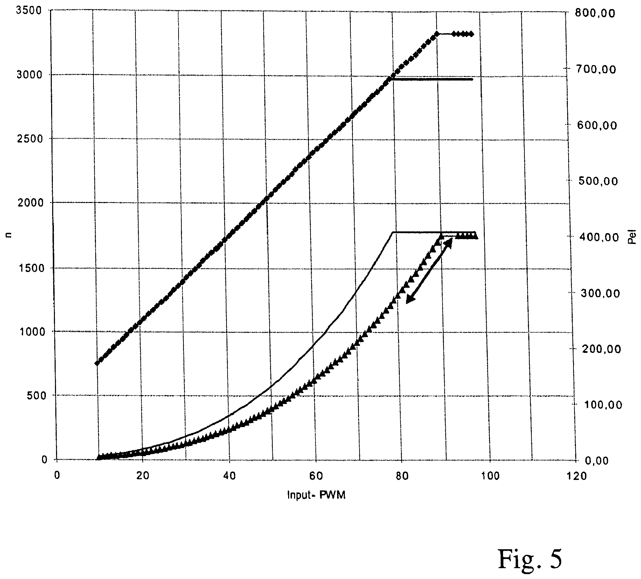

Fig. 5 zeigt ein Diagramm mit zwei Drehzahlkurven und zwei Leistungskurven, wie sie bei einer Ausführungsform einer erfindungsgemäßen Kühlerlüfteranordnung 2 aufgenommen werden können.

Fig. 5 zeigt in einem Diagramm, in welchem die Abszissenachse ein Eingangs-PWM Signal darstellt, welches den vorgegebenen Sollwert 5 darstellt. Eine erste Ordinatenachse des Diagramms, welche auf der linken Seite des Diagramms dargestellt ist, zeigt die Drehzahl in Umdrehungen pro Minute beginnend bei 0 bis 3500. Eine zweite Ordinatenachse des Diagramms, welche auf der rechten Seite des Diagramms dargestellte ist, zeigt eine elektrische Leistung in Watt.

In dem Diagramm sind zwei Drehzahlkurven dargestellt. Eine erste Drehzahlkurve ist als glatte Linie dargestellt, die zweite Drehzahlkurve ist durch eine mit Rauten versehen Linie dargestellt. Die Drehzahlkurven beginnen bei 10% PWM bei ca. 750 Umdrehungen pro Minute und steigen beide bis zu einem Eingangs-PWM Signal von 80% auf 3000 Umdrehungen pro Minute linear an. Bis zu einem Eingangs-PWM Signal von 100% verläuft die erste Drehzahlkurve ohne weiter anzusteigen bei 3000 Umdrehungen pro Minute. Die zweite Drehzahlkurve steigt bis zu einem Eingangs-PWM Signal von 90% auf 3400 Umdrehungen pro Minute weiter linear an. Bis zu einem Eingangs-PWM Signal von 100% verläuft die zweite Drehzahlkurve ohne weiter anzusteigen bei 3400 Umdrehungen pro Minute.

Ferner sind in dem Diagramm zwei Leistungskurven dargestellt. Die erste Leistungskurve ist durch eine glatte Linie dargestellt und die zweite Leistungskurve ist durch eine mit Dreiecken versehen Linie dargestellt.

Die erste Leistungskurve verläuft von einem Eingangs-PWM Signal von 0% von 0 Watt mit stetig steigendem Gradienten bis zu einem Eingangs-PWM Signal von 80% und einer Leistung von 400 Watt. Bis zu einem Eingangs-PWM Signal von 100% verläuft die erste Leistungskurve ohne weiter anzusteigen.

Die zweite Leistungskurve verläuft von einem Eingangs-PWM Signal von 0% von 0 Watt mit stetig steigendem Gradienten, welcher aber kleiner ist als derjenige der ersten Kurve, bis zu einem Eingangs-PWM Signal von 90% und einer Leistung von 400 Watt. Bis zu einem Eingangs-PWM Signal von 100% verläuft die zweite Leistungskurve ohne weiter anzusteigen.

In dem Diagramm in Fig. 5 stellen jeweils die zwei durch eine glatte Linie dargestellten Kurven das Verhalten einer erfindungsgemäßen Kühlerlüfteranordnung 2 bei Raumtemperatur und einer Höhe von 0 m über Nullniveau dar. Ferner stellen alle Kurven das Verhalten einer erfindungsgemäßen Steuervorrichtung 1 dar, welche eine maximale Dauerausgangsleitung von 400 Watt ausgeben kann.

Wird eine erfindungsgemäße Steuervorrichtung 1 bei Raumtemperatur betrieben, so erreicht die Ausgangsleitung bereits bei 3000 Umdrehungen pro Minute den Maximalwert von 400 Watt. Steigt das Eingangs-PWM Signal trotzdem weiter an, so wird der Strom durch die inneren Regelvorrichtung 6 auf einen konstanten Wert geregelt, so dass die Ausgangsleistung der Steuervorrichtung 1 400 Watt nicht übersteigt.

Die mit Rauten oder Dreiecken versehenen Kurven stellen das Verhalten einer erfindungsgemäßen Kühlerlüfteranordnung 2 bei hohen Temperaturen oder dünner Luft, z.B. wenn die Kühlerlüfteranordnung in großer Höhe betrieben wird, dar. In dem Diagramm ist zu erkennen, dass auf Grund der geringeren Dichte der Luft, welche von der Kühlerlüfteranordnung bewegt wird, die elektrische Leistung, welche dazu benötigt wird, eine bestimmte Drehzahl zu erreichen geringer ist, als bei Raumtemperatur.

Üblicherweise wird die Drehzahl bei derjenigen Drehzahl begrenzt, bei welcher die Kühlerlüfteranordnung bei Raumtemperatur und bei 0 m über Nullniveau die maximal mögliche elektrische Leistung benötigt. Wird eine solche Kühlerlüfteranordnung aber bei höheren Temperaturen, also mit weniger dichter Luft betrieben, kann die geforderte Luftmasse nicht gefördert werden, da dies bei weniger dichter Luft eine höhere Drehzahl erfordert. Droht eine Überhitzung des Verbrennungsmotors, wird ein Notlauf aktiviert, in welchem die Kühlerlüfteranordnung mit einer erhöhten Drehzahl dreht.

Anstatt die Drehzahl aber bei 3000 Umdrehungen pro Minute zu begrenzen und erst bei einer drohenden Überhitzung eines Verbrennungsmotors einen Notlauf mit einer Drehzahl von 3400 Umdrehungen pro Minute zu aktivieren, ermöglicht es eine erfindungsgemäße Steuervorrichtung 1 die Drehzahl linear bis zu der maximalen Drehzahl von 3400 Umdrehungen pro Minute zu erhöhen und erst dann die Ausgangsleistung zu begrenzen.

Der Leistungsbereich, in welchem eine erfindungsgemäße Lüfterkühleranordnung zusätzlich linear geregelt werden kann, ist in dem Diagramm durch einen Pfeil neben der zweiten Leistungskurve dargestellt. Der Pfeil beginnt bei 80% PWM und verläuft bis 90% PWM neben der zweiten Leistungskurve.

Obwohl die vorliegende Erfindung vorstehend anhand bevorzugter Ausführungsbeispiele beschrieben wurde, ist sie nicht darauf beschränkt, sondern auf vielfältige Weise modifizierbar.

### BEZUGSZEICHENLISTE

- 1: Steuervorrichtung
- 2: Kühlerlüfter
- 3: (äußere) Regelvorrichtung
- 4: Regelgröße
- 5: Sollwert
- 6: (innere) Regelvorrichtung

- 10: Elektromotor
- 11: Lüfterrad
- 12: Summationsblock
- 13: Drehzahlregler
- 14: Entscheidungsblock
- 15: Auswahlblock
- 16: Summationsblock
- 17: Stromregler
- 18: Motorwindungen

## Patentansprüche

1. Steuervorrichtung (1) für einen Kühlerlüfter (2), insbesondere für einen Kühlerlüfter (2) eines Kraftfahrzeugs, mit einer äußeren Regelvorrichtung (3), welche dazu ausgebildet ist, eine Regelgröße (4) für einen Elektromotor (10) des Kühlerlüfters (2) gemäß einem ersten vorgegebenen Sollwert (5) zu erzeugen,
mit einer inneren Regelvorrichtung (6), welche dazu ausgebildet ist, den Motorstrom des Elektromotors (10) des Kühlerlüfters (2) gemäß einem vorgegebenen ersten Motorstrommaximalwert zu regeln, wenn die von der äußeren Regelvorrichtung (3) erzeugte Regelgröße (4) einen derartigen Wert annimmt, dass der Motorstrom den vorgegebenen ersten Motorstrommaximalwert übersteigt; **dadurch gekennzeichnet, dass** die Steuervorrichtung (1) einen zweiten Maximalwert aufweist, welcher den maximal einstellbaren Wert der Regelgröße (4) vorgibt, wobei der Kühlerlüfter (2) derart ausgebildet ist, dass der Motorstrom des Elektromotors (10) bei Raumtemperatur auf den ersten Maximalwert ansteigt, bevor der Elektromotor (10) eine solche Drehzahl erreicht, welche notwendig ist, um den zweiten Maximalwert mit dem Kühlerlüfter einzustellen, wobei der erste vorgegebene Sollwert (5) in Abhängigkeit von der Temperatur und/oder der Höhe über Normalnull und/oder der Dichte der Umgebungsluft erzeugt wird.

2. Steuervorrichtung nach Anspruch 1,
**dadurch gekennzeichnet,**
**dass** der vorgegebene Sollwert (5) eine Solldrehzahl bezeichnet und dass die äußere Regelvorrichtung (3) als ein Drehzahlregler (3) ausgebildet ist, der eine Drehzahlerfassungseinrichtung aufweist, welche dazu ausgebildet ist, eine Drehzahl des Elektromotors (10) zu erfassen.

3. Steuervorrichtung nach einem der vorherigen Ansprüche,
**dadurch gekennzeichnet,**
**dass** der vorgegebene Sollwert (5) ein Soll-Luftvolumen bezeichnet und dass die äußere Regelvorrichtung (3) als ein Luftvolumenregler (3) ausgebildet ist, der eine Luftvolumenerfassungseinrichtung aufweist, welche dazu ausgebildet ist, ein Luftvolumen des Kühlerlüfters zu erfassen.

4. Steuervorrichtung nach einem der vorherigen Ansprüche,
**dadurch gekennzeichnet,**
**dass** die innere Regelvorrichtung (6) als ein Stromregler (6) ausgebildet ist, der einen Stromsensor (9) aufweist, welcher dazu ausgebildet ist, den Motorstrom des Elektromotors (10) zu erfassen, wobei die innere Regelvorrichtung (6) weiter dazu ausgebildet ist, den Motorstrom auf einen konstanten Wert derart zu regeln, dass ein von dem Elektromotor (10) aufgenommener Strom geringer ist, als ein für eine Leistungselektronik der Steuervorrichtung (1) maximal zulässiger Strom.

5. Steuervorrichtung nach einem der vorherigen Ansprüche,
**dadurch gekennzeichnet,**
**dass** die Steuervorrichtung (1) eine PWM-Schnittstelle oder eine Datenschnittstelle, insbesondere eine CAN-Busschnittstelle oder eine FlexRay-Schnittstelle oder eine LIN-Busschnittstelle, aufweist, welche dazu ausgebildet ist, die Steuervorrichtung (1) mit weiteren Fahrzeugsteuervorrichtungen zu koppeln und den Sollwert (5) von mindestens einer weiteren Fahrzeugsteuervorrichtung aufzunehmen.

6. Kühlerlüfteranordnung, insbesondere für ein Kraftfahrzeug,
mit einem Kühlerlüfter (2), welcher ein Lüfterrad (11) und einen Elektromotor (10) zum Antreiben des Lüfterrads (11) aufweist,
mit einer Steuervorrichtung (1) nach einem der Ansprüche 1 bis 5, welche mit dem Kühlerlüfter (2) gekoppelt ist und welche dazu ausgebildet ist, den Elektromotor (10) des Kühlerlüfters (2) zu steuern.

7. Verfahren zum Steuern eines Kühlerlüfters (2) eines Kraftfahrzeugs, unter Verwendung einer Steuervorrichtung (1) nach einem der Ansprüche 1 bis 6, mit den Schritten:
Erzeugen einer Regelgröße (4) für einen Elektromotor (10) des Kühlerlüfters (2) gemäß einem ersten vorgegebenen Sollwert (5);
Regeln des Motorstroms des Elektromotors (10) des Kühlerlüfters (2) gemäß einem vorgegebenen ersten Motorstrommaximalwert, wenn die Regelgröße (4) einen derartigen Wert annimmt, dass der Motorstrom den vorgegebenen ersten Motorstrommaximalwert übersteigt;
wobei ein zweiter Maximalwert vorgegeben ist, welcher den maximal einstellbaren Wert der Regelgröße (4) vorgibt, wobei beim Erzeugen der Regelgröße (4) der Motorstrom des Kühlerlüfters (2) bei Raumtemperatur auf den ersten Maximalwert ansteigt, bevor die Regelgröße (4) auf den zweiten Maximalwert geregelt wird.

8. Verfahren nach Anspruch 7,
**dadurch gekennzeichnet,**
**dass** der vorgegebene Sollwert (5) eine Solldrehzahl bezeichnet und dass die Regelgröße (4) eine Drehzahl bezeichnet, wobei zum Erzeugen der Regelgröße (4) eine Drehzahl des Kühlerlüfters (2) erfasst wird.

9. Verfahren nach Anspruch 7,
**dadurch gekennzeichnet,**
**dass** der vorgegebene Sollwert (5) ein Soll-Luftvolumen bezeichnet und dass die Regelgröße (4) ein Luftvolumen bezeichnet, wobei zum Erzeugen der Regelgröße (4) ein Luftvolumen des Kühlerlüfters (2) erfasst wird.

10. Verfahren nach einem der Ansprüche 7 bis 9,
**dadurch gekennzeichnet,**
**dass** beim Regeln des Motorstroms der Motorstrom auf einen konstanten Wert geregelt wird, wobei eine von dem Elektromotor (10) aufgenommene Leistung geringer ist, als eine für eine Leistungselektronik der den Elektromotor (10) ansteuernden Steuereinrichtung (1) maximal zulässige Leistung.

## Claims

1. Control device (1) for a radiator fan (2), in particular for a radiator fan (2) of a motor vehicle,
comprising an external closed-loop control device (3) designed to generate a control variable (4) for an electric motor (10) of the radiator fan (2) according to a first predetermined desired value (5),
comprising an internal closed-loop control device (6) designed for the closed-loop control of the motor current of the electric motor (10) of the radiator fan (2), according to a predetermined first motor current maximum value, when the control variable (4) generated by the external closed-loop control device (3) assumes a value such that the motor current exceeds the predetermined first motor current maximum value;
**characterised in that**
the control device (1) has a second maximum value which presets the maximum value which can be set of the control variable (4), the radiator fan (2) being designed such that, at room temperature, the motor current of the electric motor (10) increases to the first maximum value before the electric motor (10) reaches such a speed as is necessary to set the second maximum value with the radiator fan, wherein the first predetermined desired value (5) is generated according to the temperature and/or height above sea level and/or the ambient air density.

2. Control device as claimed in claim 1, **characterised in that**
the predetermined desired value (5) designates a desired speed, and **in that** the external closed-loop control device (3) is designed as a closed-loop speed controller (3) having a speed detection means designed to detect a speed of the electric motor (10).

3. Control device as claimed in any one of the preceding claims, **characterised in that**
the predetermined desired value (5) designates a desired air volume, and **in that** the external closed-loop control device (3) is designed as a closed-loop air volume controller (3) having an air volume detection means designed to detect an air volume of the radiator fan.

4. Control device as claimed in any one of the preceding claims, **characterised in that**
the internal closed-loop control device (6) is designed as a closed-loop current controller (6) having a current sensor (9) designed to detect the motor current of the electric motor (10), the internal closed-loop control device (6) further being designed to control the motor current to a constant value such that a current consumed by the electric motor (10) is lower than a maximum permissible current for the power electronics of the control device (1).

5. Control device as claimed in any one of the preceding claims, **characterised in that**
the control device (1) has a PWM interface or a data interface, in particular a CAN bus interface or a FlexRay interface or an LIN bus interface, which is designed to couple the control device (1) to other vehicle control devices and to pick up the desired value (5) from at least one other vehicle control device.

6. Radiator fan arrangement, in particular for a motor vehicle,
comprising a radiator fan (2) having an impeller (11) and an electric motor (10) for driving the impeller (11),
comprising a control device (1) as claimed in any one of claims 1 to 5 which is coupled to the radiator fan (2) and is designed to control the electric motor (10) of the radiator fan (2).

7. Method for controlling a radiator fan (2) of a motor vehicle, using a control device (1) as claimed in any one of claims 1 to 6, comprising the steps of:
generating a control variable (4) for an electric motor (10) of the radiator fan (2) according to a first predetermined desired value (5);
controlling, in a closed-loop manner, the motor current of the electric motor (10) of the radiator fan (2) according to a predetermined first motor current maximum value, when the control variable (4) assumes a value such that the motor current exceeds the predetermined first motor current maximum value;
wherein a second maximum value is preset, which presets the maximum value that can be set of the control variable (4), wherein the motor current of the radiator fan (2) increases at room temperature to the first maximum value when the control variable (4) is being generated, before the control variable (4) is controlled to the second maximum value.

8. Method as claimed in claim 7, **characterised in that** the predetermined desired value (5) designates a desired speed, and **in that** the control variable (4) designates a speed, wherein a speed of the radiator fan (2) is detected in order to generate the control variable (4).

9. Method as claimed in claim 7, **characterised in that**
the predetermined desired value (5) designates a desired air volume, and **in that** the control variable (4) designates an air volume, wherein an air volume of the radiator fan (2) is detected in order to generate the control variable (4).

10. Method as claimed in any one of claims 7 to 9, **characterised in that**
during closed-loop control of the motor current, the motor current is controlled to a constant value, power consumed by the electric motor (10) being lower than a maximum permissible power for the power electronics of the control device (1) actuating the electric motor (10).

## Revendications

1. Dispositif de commande (1) pour un ventilateur de radiateur (2), en particulier pour un ventilateur de radiateur (2) d'un véhicule automobile,
comportant un dispositif régulateur extérieur (3), qui est conçu pour générer une valeur réglée (4) pour un moteur électrique (1) du ventilateur de radiateur (2) selon une première valeur de consigne (5) prédéfinie, comportant un dispositif régulateur intérieur (6), qui est conçu pour régler le courant de moteur du moteur électrique (10) du ventilateur de radiateur (2) selon une première valeur maximale de courant de moteur prédéfinie, lorsque la valeur réglée (4) générée par le dispositif régulateur extérieur (3) prend une valeur telle que le courant de moteur dépasse la première valeur maximale de courant de moteur prédéfinie ;
**caractérisé en ce que**
le dispositif de commande (1) comporte une seconde valeur maximale, qui définit la valeur maximale réglable de la valeur réglée (4), le ventilateur de radiateur (2) étant réalisé de telle manière que le courant de moteur du moteur électrique (10) augmente jusqu'à la première valeur maximale à température ambiante, avant que le moteur électrique (10) atteigne une vitesse de rotation qui est nécessaire pour régler la seconde valeur maximale avec le ventilateur de radiateur, la première valeur de consigne (5) prédéfinie étant générée en fonction de la température et/ou de la hauteur au-dessus du niveau de la mer et/ou de la densité de l'air ambiant.

2. Dispositif de commande selon la revendication 1, **caractérisé en ce que**
la valeur de consigne (5) prédéfinie désigne une vitesse de rotation de consigne et **en ce que** le dispositif régulateur extérieur (3) est réalisé sous la forme d'un régulateur de vitesse de rotation (3), qui comporte un moyen de détection de la vitesse de rotation, qui est conçu pour détecter une vitesse de rotation du moteur électrique (10).

3. Dispositif de commande selon l'une des revendications précédentes, **caractérisé en ce que**
la valeur de consigne (5) prédéfinie désigne un volume d'air de consigne et **en ce que** le dispositif régulateur extérieur (3) est réalisé sous la forme d'un régulateur de volume d'air (3), qui comporte un moyen de détection du volume d'air, qui est conçu pour détecter un volume d'air du ventilateur de radiateur.

4. Dispositif de commande selon l'une des revendications précédentes, **caractérisé en ce que**
le dispositif régulateur intérieur (6) est réalisé sous la forme d'un régulateur de courant (6), qui comporte un capteur de courant (9), qui est conçu pour détecter le courant de moteur du moteur électrique (10), le dispositif régulateur intérieur (6) étant en outre conçu pour régler le courant de moteur à une valeur constante de telle manière qu'un courant absorbé par le moteur électrique (10) est inférieur à un courant maximal admissible pour une électronique de puissance du dispositif de commande (1).

5. Dispositif de commande selon l'une des revendications précédentes, **caractérisé en ce que**
le dispositif de commande (1) comporte une interface PWM ou une interface de données, en particulier une interface CAN-bus ou une interface FlexRay ou une interface LIN-bus, qui est conçue pour coupler le dispositif de commande (1) à d'autres dispositifs de commande du véhicule et recevoir la valeur de consigne (5) d'au moins un autre dispositif de commande du véhicule.

6. Agencement de ventilateur de radiateur, en particulier pour un véhicule automobile,
comprenant un ventilateur de radiateur (2), qui comporte une roue de ventilateur (11) et un moteur électrique (10) pour entraîner la roue de ventilateur (11),
comprenant un dispositif de commande (1) selon l'une des revendications 1 à 5, qui est couplé au ventilateur de radiateur (2) et qui est conçu pour commander le moteur électrique (10) du ventilateur de radiateur (2).

7. Procédé de commande d'un ventilateur de radiateur (2) d'un véhicule automobile,
au moyen d'un dispositif de commande (1) selon l'une des revendications 1 à 6, comprenant les étapes consistant à :
générer une valeur réglée (4) pour un moteur électrique (10) du ventilateur de radiateur (2) selon une première valeur de consigne (5) prédéfinie ;
régler le courant de moteur du moteur électrique (10) du ventilateur de radiateur (2) selon une première valeur maximale de courant de moteur prédéfinie, quand la valeur réglée (4) prend une valeur telle que le courant de moteur dépasse la première valeur maximale de courant de moteur prédéfinie ;
dans lequel une seconde valeur maximale est prédéfinie, qui définit la valeur maximale réglable de la valeur réglée (4), dans lequel, lors de la génération de la valeur réglée (4), le courant de moteur du ventilateur de radiateur (2) augmente jusqu'à la première valeur maximale à température ambiante, avant que la valeur réglée (4) soit réglée à la seconde valeur maximale.

8. Procédé selon la revendication 7, **caractérisé en ce que** la valeur de consigne (5) prédéfinie désigne une vitesse de rotation de consigne et **en ce que** la valeur réglée (4) désigne une vitesse de rotation, une vitesse de rotation du ventilateur de radiateur (2) étant détectée pour générer la valeur réglée (4).

9. Procédé selon la revendication 7, **caractérisé en ce que** la valeur de consigne (5) prédéfinie désigne un volume d'air de consigne et **en ce que** la valeur réglée (4) désigne un volume d'air, un volume d'air du ventilateur de radiateur (2) étant détecté pour générer la valeur réglée (4).

10. Procédé selon l'une des revendications 7 à 9, **caractérisé en ce que**
lors du réglage du courant de moteur, le courant de moteur est réglé à une valeur constante, une puissance absorbée par le moteur électrique (10) étant inférieure à une puissance maximale admissible pour une électronique de puissance du dispositif de commande (1) commandant le moteur électrique (10).
